**Europäisches Patentamt**

**European Patent Office**

**Office européen des brevets**

(11) Veröffentlichungsnummer: **0 029 236**
A1

# EUROPÄISCHE PATENTANMELDUNG

(21) Anmeldenummer: **80107068.1**

(22) Anmeldetag: **14.11.80**

(51) Int. Cl.³: **G 01 G 13/28,** G 01 G 11/08,
B 05 B 12/00, B 05 B 7/14,
G 05 D 7/06, B 65 G 53/66

(30) Priorität: **19.11.79 DE 2946569**

(43) Veröffentlichungstag der Anmeldung: **27.05.81**
**Patentblatt 81/21**

(84) Benannte Vertragsstaaten: **CH DE FR GB IT LI NL SE**

(71) Anmelder: **MTU MOTOREN- UND TURBINEN-UNION
MÜNCHEN GMBH, Dachauer Strasse 665,
D-8000 München 50 (DE)**

(72) Erfinder: **Bösmiller, Erich, Elisabethstrasse 29,
D-8044 Lohhof (DE)**

(54) Vorrichtung zum thermischen Verspritzen von Metall- und Keramikpulvern.

(57) Vorrichtung zum thermischen Verspritzen von Metall- und Keramikpulvern und deren Mischungen mit auf einer Präzisionswaage (1) installiertem Pulvervorratsbehälter (12) mit Einrichtungen (8) zur Förderung des Pulvers aus dem Vorratsbehälter (12) zu einer Spritzpistole (14), wobei die Waage (1) eine Einrichtung (3) aufweist, in der der jeweils während eines Zeitintervalls registrierte Gewichtsverlust $\Delta G$ durch die Dauer des Zeitintervalls $\Delta t$ dividiert wird.

EP 0 029 236 A1

ba/fr — 3 — 0029236

MTU MOTOREN- UND TURBINEN-UNION
MÜNCHEN GMBH

München, 19. November 1979

Vorrichtung zum thermischen Verspritzen
von Metall- und Keramikpulvern

Die Erfindung bezieht sich auf eine Vorrichtung zum thermischen Verspritzen von Metall- und Keramikpulvern und deren
Mischungen mit einem Pulvervorratsbehälter und Einrichtungen zur Förderung des Pulvers aus dem Vorratsbehälter
zu einer Spritzpistole.

Bei solchen Spritzvorrichtungen ist es zur Erzielung einer
gleichmäßigen Beschichtung, insbesondere zur Erzielung
höchst konstanter Schichtstärke notwendig, den Durchsatz an Beschichtungspulver durch die Vorrichtung genau
zu ermitteln. Bei bisher bekannten Vorrichtungen erfolgt
diese Bestimmung des Pulverdurchsatzes in der Weise,
daß für eine genau festgelegte Zeitdauer Pulver in einen
Auffangbehälter gespritzt wird und aus dem Gewicht des

T-618

0029236

Behälters vorher und nachher sowie aus der Messung der Zeitdauer und entsprechender Division ein Durchschnittswert des Pulverdurchsatzes errechnet wird. Diese Methode ist umständlich und zeitraubend und überdies nicht hinreichend genau, da Schwankungen des Durchsatzes während der Meßdauer nicht ermittelbar sind, so daß also beim Beschichten von Werkstücken durch schwankenden Durchsatz wiederum Ungleichmäßigkeiten bei der Beschichtung auftreten können.

Aufgabe der vorliegenden Erfindung ist es deshalb, eine gattungsgemäße Vorrichtung so auszubilden, daß der momentane Durchsatz an Beschichtungspulver möglichst genau bestimmbar ist, wobei die Bestimmung des Durchsatzes keine Betriebsunterbrechung der Anlage hervorrufen soll und wobei zusätzlich der für die Bestimmung notwendige Aufwand so gering wie möglich gehalten werden soll.

Zur Lösung dieser Aufgabe wird erfindungsgemäß vorgeschlagen, daß bei einer gattungsgemäßen Vorrichtung der Pulvervorratsbehälter mit den Fördereinrichtungen auf einer Präzisionswaage installiert ist, die eine Vorrichtung zur laufenden Registrierung des Gewichts nach je-

T-618
19.11.1979

weils kleinen Zeitintervallen aufweist, und eine Rechenschaltung, in der der jeweils während eines Zeitintervalles registrierte Gewichtsverlust $\triangle G$ durch die Dauer
des Zeitintervalles $\triangle t$ dividiert wird.

Die erfindungsgemäße Vorrichtung löst die gestellte Aufgabe in vorzüglicher Weise, indem ohne Beeinträchtigung
des Arbeitsprozesses der Momentandurchsatz von Spritzpulver durch die Vorrichtung ständig errechnet und angezeigt werden kann. Durch entsprechende Wahl der Zeitintervalle im Bereich von wenigen Sekunden kann eine
hohe Genauigkeit der Anzeige erzielt werden. Dabei ist
der vorrichtungs- und schaltungstechnische Aufwand
relativ gering. Wird eine außerplanmäßige Änderung des
Durchsatzes angezeigt, so kann der Spritzvorgang sofort
unterbrochen werden, mit der Folge, daß die Ausschußquote bei der Beschichtung von Werkstücken wesentlich
verringert werden kann bei gleichzeitiger Steigerung
der Beschichtungsqualität.

In weiterer Ausbildung der Erfindung wird vorgeschlagen,
daß als Präzisionswaage eine solche mit elektronischer
Anzeige und mit elektronischem Datenausgang verwendet
wird. Die Anwendung einer solchen Waage hat den Vorteil,

T-618
19.11.1979

daß das festgestellte Gewicht als elektronisches Signal direkt in einer Rechenschaltung verwertbar ist, ohne daß etwa eine Umsetzung des Signals stattfinden müßte. Vorzugsweise soll die Rechenschaltung ein Mikrocomputer sein.

In weiterer Ausbildung der Erfindung wird vorgeschlagen, daß eine vorbezeichnete Vorrichtung zur Konstanthaltung der pro Zeiteinheit verspritzten Pulvermenge einen geschlossenen Regelkreis mit einem Sollwertgeber und einem Regler umfaßt, der mit der Einrichtung zur Förderung des Pulvers (Stellglied) in Wirkverbindung steht.

Eine solcherart ausgebildete Vorrichtung hat den Vorteil, daß selbst bei Auftreten von unterschiedlichen Störgrößen, die an sich den Pulverdurchsatz verändern müßten, durch den geschlossenen Regelkreis der Durchsatz konstant gehalten werden kann. Darüber hinaus ist es möglich, am Sollwertgeber den gewünschten Pulverdurchsatz je nach den bauteilspezifischen Anforderungen einzustellen.

Anhand der beigefügten Zeichnungen wird die Erfindung erläutert. In den Zeichnungen zeigt

T-618
19.11.1979

0029236

Fig. 1    eine Gesamtansicht einer erfindungsgemäßen Spritzvorrichtung schematisch,

Fig. 2    das Blockschaltbild eines ·Regelkreises
         für eine Vorrichtung gemäß Fig. 1.

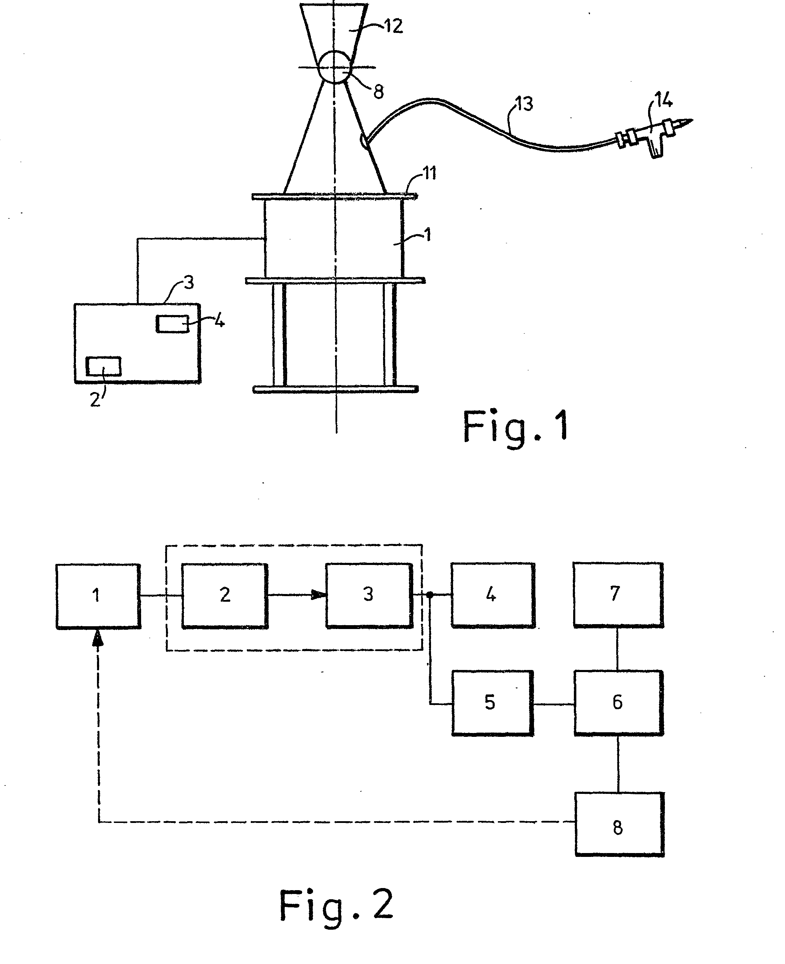

In Fig. 1 ist eine Waage mit 1 bezeichnet. Auf einer Grundplatte 11 der Waage 1 befindet sich ein Pulvervorratsbehälter 12, an den ein Pulverförderrad 8 angeschlossen ist,
welches Pulver aus dem Pulvervorratsbehälter 12 durch
eine Leitung 13 zu einer Spritzpistole 14 fördert. Üblicherweise wird zur Förderung des Spritzpulvers Fördergas verwendet. Von der Waage 1 wird das Gewichtsausgangssignal zu einem Mikrocomputer 3 geführt. Dieser weist
eine Anzeige 4 für den Durchsatz pro Zeiteinheit und
eine Anzeige 2 für die insgesamt während eines Beschichtungsprozesses durchgesetzte Pulvermenge auf.

Im Blockschaltbild gemäß Fig. 2 ist die Waage wieder mit
1 bezeichnet. Das Ausgangssignal wird in den Mikrocomputer 3 geführt, der eine Rechenschaltung umfaßt, in
der der registrierte Gewichtsverlust $\Delta G$ durch die Dauer
des Zeitintervalles $\Delta t$, in dem er aufgetreten ist,
dividiert wird. Dadurch wird der momentane Wert des
Durchsatzes von Pulver durch die Vorrichtung errechnet

T-618
19.11.1979

und in einer weiteren Anzeige 4 angezeigt. Außerdem wird der errechnete Wert des momentanen Durchsatzes über einen Analogumsetzer 5 einem Regler 6 zugeführt und dort mit einem Sollwert, der von einem Sollwertgeber 7 dem Regler 6 zugeführt wird, verglichen. Das Ausgangssignal des Reglers 6 führt zu einem Antrieb des Pulverförderrades 8 (= Stellglied), wodurch der Pulverdurchsatz veränderbar ist. Die vom Pulverförderrad 8 zur Waage 1 führende Wirkungslinie schließt den Regelkreis und zeigt an, daß sich die Gewichtsdifferenz $\Delta G$ pro Zeitintervall $\Delta t$ durch Änderung der Fördermenge verändert. Der Regler 6 ist vorzugsweise ein PID-Regler.

T-618
19.11.1979

ba/fr

0029236

MTU MOTOREN- UND TURBINEN-UNION
MÜNCHEN GMBH

München, 19. November 1979

## P a t e n t a n s p r ü c h e

1. Vorrichtung zum thermischen Verspritzen von Metall- und Keramikpulvern und deren Mischungen mit einem Pulvervorratsbehälter und Einrichtungen zur Förderung des Pulvers aus dem Vorratsbehälter zu einer Spritzpistole, dadurch gekennzeichnet, daß der Pulvervorratsbehälter mit den Fördereinrichtungen auf einer Präzisionswaage installiert ist, die eine Vorrichtung zur laufenden Registrierung des Gewichts nach jeweils kleinen Zeitintervallen aufweist, und eine Rechenschaltung, in der der jeweils während eines Zeitintervalles registrierte Gewichtsverlust $\Delta G$ durch die Dauer des Zeitintervalles $\Delta t$ dividiert wird.

2. Vorrichtung nach Anspruch 1, dadurch gekennzeichnet, daß als Präzisionswaage eine solche mit elektronischer

T-618

Anzeige und mit elektronischem Datenausgang verwendet wird.

3.  Vorrichtung nach Anspruch 1 oder 2, dadurch gekennzeichnet, daß die Rechenschaltung ein Mikrocomputer
ist.

4.  Vorrichtung nach den Ansprüchen 1 bis 3, dadurch gekennzeichnet, daß sie zur Konstanthaltung der pro
Zeiteinheit verspritzten Pulvermenge einen geschlossenen Regelkreis mit einem Sollwertgeber und
einem Regler umfaßt, der mit der Einrichtung zur
Förderung des Pulvers (Stellglied) in Wirkverbindung
steht.

5.  Vorrichtung nach den Ansprüchen 1 bis 4, dadurch
gekennzeichnet, daß der Regler ein PID-Regler ist.

T-618
19.11.1979

Fig. 1

Fig. 2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 553 031 (ALB. KLEIN KG)<br>  * Seite 10, Absatz 3; Ansprüche 1,4,12; Figur 1 * | 1,4 |
|  | -- |  |
|  | US - A - 3 481 509 (H. MARHAUER)<br>  * Insgesamt * | 1,2,4,5 |
|  | -- |  |
|  | US - A - 2 619 256 (R.M. WELEY)<br>  * Anspruch 1; Figur 1 * | 1,4 |
|  | -- |  |
|  | CH - A - 581 317 (ARBO-ANALOG-TECHNIK S.A.)<br>  * Insgesamt * | 1,4 |
|  | -- |  |
|  | US - A - 3 967 758 (A. FERRARA)<br>  * Spalte 3, Zeilen 42-68; Spalte 4; Spalte 5, Zeilen 1-38; Anspruch 1; Figuren 1,2 *<br>& DE - A - 2 606 518 | 1,2,4 |
|  | -- |  |
|  | DE - A - 2 461 093 (ALUMINIUM PECHINEY)<br>  * Insgesamt * | 4 |
|  | -- |  |
| A | DE - A - 2 029 989 (METCO INC.) |  |
|  | ---- |  |

**KLASSIFIKATION DER ANMELDUNG (Int. Cl.³)**

G 01 G 13/28
        11/08
B 05 B 12/00
        7/14
G 05 D 7/06
B 65 G 53/66

**RECHERCHIERTE SACHGEBIETE (Int. Cl.³)**

G 01 G
B 05 B
B 65 G
G 05 D

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 09-02-1981 | COLPAERT |

EPA form 1503.1   06.78